# FASCICULE DE BREVET EUROPEEN

(11) **EP 2 767 449 B1**
(45) Date de publication et mention de la délivrance du brevet: **14.02.2018**
(21) Numéro de dépôt: 14155201.8
(22) Date de dépôt: 14.02.2014
(51) Int. Cl.: B60W 30/06

(54) **Dispositif de manoeuvre automatique comprenant un boîtier de commande à distance**
Vorrichtung zum automatischen Manövrieren mit Fernbedienung
Device for automatic manoeuvring comprising a remote control

(30) Priorité: 15.02.2013 FR 1300335
(43) Date de publication de la demande: 20.08.2014
(73) Titulaire: Valeo Comfort and Driving Assistance, 94046 Créteil Cedex (FR)
(72) Inventeur: Gueble, Christophe, 94046 Créteil Cedex (FR)
(74) Mandataire: Pothmann, Karsten

(56) Documents cités:
- EP-A2- 1 249 379
- DE-A1-102008 051 982
- DE-A1-102012 008 858
- DE-U1-202008 018 157
- US-A1- 2010 274 414

## Description

### Domaine technique de l'invention

L'invention concerne le domaine des boîtiers de commande à distance qui sont chargés de commander par voie d'ondes (radiofréquences) au moins une fonction d'un véhicule, éventuellement de type automobile.

### Etat de l'art

Comme le sait l'homme de l'art, certains boîtiers de commande à distance, parfois appelés clés électroniques, comprennent une interface homme/machine permettant à un usager d'un véhicule d'activer au moins une fonction offerte par ce véhicule, alors même qu'il est éloigné de ce dernier. Par exemple, l'interface homme/machine peut comporter des touches actionnables ou sensitives (ou tactiles) dédiées à la commande à distance du verrouillage/déverrouillage centralisé des portes latérales du véhicule, et/ou des touches actionnables ou sensitives (ou tactiles) dédiées à la commande à distance du verrouillage/déverrouillage centralisé du hayon arrière (ou volet de coffre) du véhicule, et/ou des touches actionnables ou sensitives (ou tactiles) dédiées à la commande à distance du pré-conditionnement (notamment aérothermique) du véhicule

De telles commandes peuvent également permettre d'opérer à distance la manoeuvre automatique d'un équipement du véhicule tel qu'une porte, un hayon de coffre ou un toit motorisé. Dans un développement plus récent de telles commandes permettent d'opérer à distance la manoeuvre automatique du véhicule lui-même dans un but de stationnement.

De telles commandes à distance facilitent la vie et/ou améliorent le confort des usagers du véhicule. Un boîtier de commande selon le préambule de la revendication 1 est connu du document DE 10 2008 051 982 A. Afin d'éviter tout accident lors des ces différentes manoeuvres automatiques, l'utilisateur doit pouvoir, à tout moment et de manière fiable, interrompre la manoeuvre automatique du véhicule en cours.

Cependant, dans les télécommandes de l'état de la technique, la commande de manoeuvre automatique est généralement réalisée par un interrupteur du type bouton poussoir. La manoeuvre est alors opérée tant que le bouton est dans la position enfoncée, la position relâché signifiant une interruption de la manoeuvre.

Or, avec de tels interrupteurs, un blocage mécanique, dans la position active, pourrait entrainer le non-arrêt du véhicule et conduire à un accident.

Afin de surmonter au moins partiellement les inconvénients précités de l'état de la technique et proposer une solution permettant d'interrompre de manière fiable le parcage automatique d'un véhicule, il convient de fiabiliser le fonctionnement de la commande de parcage.

Ainsi, la présente invention concerne un boîtier de commande à distance d'un dispositif de manoeuvre automatique d'un véhicule automobile comprenant, ledit boîtier est destiné à communiquer avec une unité centrale située au niveau du véhicule automobile et comprend :
- au moins un élément de commande dédié à une manoeuvre automatique,
- un autre élément de commande d'une fonction dédiée sur le véhicule,
- des moyens d'activation de ladite manoeuvre automatique, par action sur au moins un élément de commande dédié à ladite manoeuvre automatique,
- des moyens de désactivation de ladite manoeuvre automatique, par action sur au moins un élément de commande dédié à ladite manoeuvre automatique,
caractérisé en ce qu'il comprend en outre :
- d'autres moyens de désactivation de ladite manoeuvre automatique par action sur l'autre élément de commande du boîtier de commande à distance.

Le boîtier de commande de la présente invention peut en outre présenter une ou plusieurs des caractéristiques suivantes, prises seules ou en combinaison :
- l'élément de commande de ladite manoeuvre automatique est un interrupteur réalisé sous la forme d'un bouton-poussoir ;
- l'élément de commande de ladite manoeuvre automatique est un interrupteur réalisé sous la forme d'un bouton tactile ;
- l'autre élément de commande d'une fonction dédiée sur le véhicule est un interrupteur réalisé sous la forme d'un bouton-poussoir ;
- l'autre élément de commande d'une fonction dédiée sur le véhicule est un interrupteur réalisé sous la forme d'un bouton tactile ;
- les autres moyens de désactivation de ladite manoeuvre automatique consiste en une réaffectation de la fonction de commande dudit autre élément de commande d'une fonction dédiée sur le véhicule, de la fonction dédiée correspondante en une fonction d'arrêt de ladite au moins une manoeuvre automatique ;
- l'élément de commande de manoeuvre automatique et ledit autre élément de commande d'une fonction dédiée font partie d'une architecture électronique et en ce que les autres moyens de désactivation de ladite manoeuvre automatique consiste en une logique spécifique de ladite architecture électronique dans laquelle :
   ∘ si l'élément de commande de ladite manoeuvre automatique est activé et que ledit autre élément de commande d'une fonction dédiée n'est pas activé, ladite manoeuvre automatique est opérée;
   ∘ si l'élément de commande de ladite manoeuvre automatique n'est pas activé et que ledit autre élément de commande d'une fonction dédiée est activé, ladite fonction dédiée est opérée;
   ∘ si l'élément de commande de ladite manoeuvre automatique est activé et que ledit autre élément de commande d'une fonction dédiée est activé, ladite manoeuvre automatique est stoppée.
- l'action sur l'élément de commande de ladite manoeuvre automatique est continue.
- l'action sur l'élément de commande de ladite manoeuvre automatique est ponctuelle.
- ladite manoeuvre automatique est choisie dans un groupe comprenant au moins :
   ∘ une manoeuvre pour se garer automatiquement sur une place de stationnement ;
   ∘ une manoeuvre pour sortir automatiquement d'une place de stationnement,
   ∘ une manoeuvre pour ouvrir une porte latérale dudit véhicule,
   ∘ une manoeuvre pour fermer une porte latérale dudit véhicule,
   ∘ une manoeuvre pour ouvrir un toit dudit véhicule,
   ∘ et une manoeuvre pour fermer un toit dudit véhicule.
   ∘ une manoeuvre pour ouvrir un volet de coffre ou un hayon dudit véhicule,
   ∘ et une manoeuvre pour fermer un volet de coffre ou un hayon dudit véhicule.

L'invention porte également sur un dispositif de manoeuvre automatique d'une manoeuvre automatique du véhicule comprenant un boîtier de commande à distance conforme à l'invention.

D'autres caractéristiques et avantages de l'invention apparaîtront dans la description qui va maintenant en être faite, en référence à la figure unique annexée qui en représente, à titre indicatif mais non limitatif, un mode de réalisation possible.

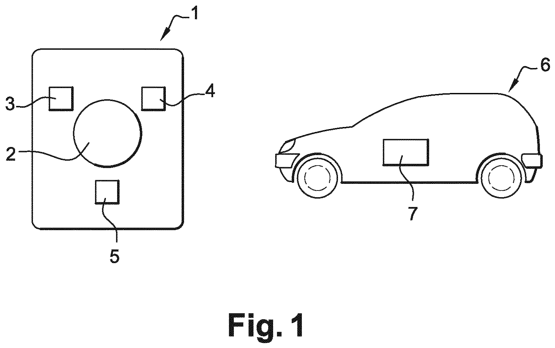

La figure 1 montre un schéma d'un boîtier de commande à distance 1 réalisé par exemple sous la forme d'une télécommande ou d'un téléphone portable. Le boîtier de commande comprend un élément de commande 2 d'une manoeuvre automatique du véhicule.

On entend par manoeuvre automatique du véhicule, soit les manoeuvres du véhicule lui-même, c'est-à-dire qui se traduisent par un déplacement du véhicule, comme par exemple les manoeuvres liées au stationnement du véhicule, soit les manoeuvres dynamiques de certains composants du véhicule comme les portières, le coffre ou le hayon, le toit ou les fenêtres.

Comme illustré sur la figure 1, le boîtier de commande 1 comprend également à titre d'exemple trois autres éléments de commande 3, 4 et 5. Ces éléments de commande sont par exemple dédiés à des fonctions dites « statiques » du véhicule comme le verrouillage/déverrouillage des portières du véhicule, l'ouverture de la trappe à essence, ou l'allumage de certaines fonctions d'éclairage et/ou de signalisation.

Le boîtier de commande 1 peut également présenter un écran par exemple du type LCD. Cet écran participe à l'amélioration de l'interface homme-machine.

De manière connue, le boîtier de commande 1 communique par ondes radiofréquences avec une unité centrale disposé dans le véhicule. Cette communication permet de traduire les actions sur les différents éléments de commande 2, 3, 4 ou 5 en une ou plusieurs fonctions sur le véhicule.

Dans la suite de la description nous allons considérer que l'élément de commande 2, commande un manoeuvre automatique pour se garer sur une place de stationnement et pour sortir d'une place de stationnement. Bien entendu, ces deux manoeuvres distinctes pourraient être, dans un autre mode de réalisation, opérées par deux éléments de commande distincts.

Dans un mode de réalisation non limitatif, l'élément de commande 2 de la manoeuvre de stationnement se présente sous la forme d'un bouton-poussoir. De manière préférentielle, la manoeuvre n'est effective que si le bouton-poussoir est maintenu enfoncé, tout relâchement du bouton-poussoir se traduisant par un arrêt de la manoeuvre automatique en cours.

Dans un autre mode de réalisation la commande de la manoeuvre automatique est enclenchée par un appui ponctuel sur le bouton-poussoir, la manoeuvre se poursuivant avec le bouton poussoir relâché. Dans cette configuration l'arrêt de la manoeuvre automatique en cours sera opéré par un nouvel appui ponctuel sur le bouton-poussoir ayant déjà servi au lancement de la manoeuvre automatique. De manière alternative, l'arrêt sera opéré par appui ponctuel sur un deuxième bouton-poussoir dédié à l'arrêt de la manoeuvre automatique.

Dans un mode de réalisation alternatif, le bouton-poussoir est remplacé par un bouton tactile. De manière préférentielle la manoeuvre ne sera effective que si une partie du corps de l'utilisateur, généralement le doigt d'une main, reste en contact avec la zone active du bouton tactile, tout retrait du contact se traduisant par un arrêt de la manoeuvre automatique en cours. Dans un autre mode de réalisation la commande de la manoeuvre automatique est enclenchée par un contact ponctuel sur le bouton tactile, la manoeuvre se poursuivant en l'absence de contact sur le bouton tactile. Dans cette configuration l'arrêt de la manoeuvre automatique en cours sera opéré par un nouveau contact ponctuel sur le bouton tactile ayant déjà servi au lancement de la manoeuvre automatique. De manière alternative, l'arrêt sera opéré par un contact ponctuel sur un deuxième bouton tactile dédié à l'arrêt de la manoeuvre automatique.

Les autres éléments de commande 3, 4 et 5 du boîtier de commande 1 pourront se présenter indépendamment sous la forme de boutons-poussoirs ou de boutons tactiles.

Quelque soit le mode de réalisation, l'utilisateur peut être amené à interrompre en urgence la manoeuvre en cours. Dans ce contexte d'urgence, l'utilisateur doit pouvoir lancer l'ordre d'interruption de la manoeuvre de la manière la plus intuitive, c'est à dire nécessitant le moins de perte de temps.

Selon un premier mode de réalisation et comme nous l'avons décrit précédemment, la commande de la manoeuvre automatique pour se garer à un emplacement de stationnement est lancée par appui sur le bouton-poussoir 2. La manoeuvre se poursuit jusqu'à son terme, c'est-à-dire jusqu'à ce que le véhicule atteigne l'emplacement définitif déterminé par le dispositif de manoeuvre automatique, tant que le bouton-poussoir est maintenu enfoncé.

A partir du moment où la manoeuvre automatique est engagée et tant que cette manoeuvre n'est pas arrêtée, l'ensemble des éléments de commandes 3, 4, et 5, qui dans un mode normale sont affecté à des fonctions dites « statiques » du véhicule, se voient réaffecter à la fonction d'arrêt de la manoeuvre automatique.

On obtient cette réaffectation des éléments de commandes 3, 4, et 5 en inscrivant dans le programme de commande du boîtier de commande 1, les lignes suivantes présentées à titre d'exemple pour l'élément de commande 3 :
- si appui sur l'élément de commande 3 et manoeuvre automatique non active, activer la fonction 3 du véhicule,
- si appui sur l'élément de commande 3 et manoeuvre automatique active, stopper la manoeuvre automatique du véhicule.

Dans un mode de réalisation alternatif, la réaffectation n'est pas du fait des lignes de codes du programme de commande du boîtier de commande 1, mais est inhérente à l'architecture logique du circuit électronique de commande du boîtier de commande 1 dans laquelle :
- si l'élément de commande 2 de la manoeuvre automatique est activé et que l'élément de commande 3 n'est pas activé, on active la manoeuvre automatique du véhicule;
- si l'élément de commande 2 de la manoeuvre automatique n'est pas activé et que l'élément de commande 3 est activé, on active la fonction dédiée 3 du véhicule;
- si l'élément de commande 2 de la manoeuvre automatique est activé et que l'élément de commande 3 est activé, on stoppe la manoeuvre automatique du véhicule.

Nous avons décrit les modes de réalisation de réaffectation des éléments de commande 3, 4 et 5 des fonctions dites « statiques » du véhicule, en fonction d'arrêt de la manoeuvre automatique, dans le cas ou l'élément de commande 2 de la manoeuvre automatique est un bouton-poussoir. Il en sera de même dans le cas ou l'élément de commande 2 de la manoeuvre automatique est un bouton tactile.

Il en sera également de même pour les modes de réalisation où l'activation de la manoeuvre automatique est opérée par un appui ponctuel ou un contact ponctuel.

par soucis de sécurité renforcée, et pour tous les modes de réalisation envisageables, si la communication entre le boîtier de commande 1 et l'unité centrale 7 du véhicule n'est plus opérationnelle, c'est-à-dire qu'il n'est plus possible de traduire les actions sur les éléments de commande 2, 3, 4 ou 5 en action sur le véhicule, mais qu'une manoeuvre automatique du véhicule est en cours, la manoeuvre automatique en cours sera stoppée au bout d'un durée prédéterminée à compter du moment de la perte de la liaison bidirectionnelle entre le boîtier de commande 1 et l'unité centrale 7 du véhicule. Cette durée est de l'ordre de quelque dizaines de millisecondes, préférentiellement de 50 ms.

## Revendications

1. Boîtier de commande à distance (1) d'un dispositif de manoeuvre automatique d'un véhicule automobile (6), destiné à communiquer avec une unité centrale (7) située au niveau du véhicule automobile (6), ledit boîtier (1) comprenant :
- au moins un élément de commande (2) dédié à une manoeuvre automatique,
- un autre élément de commande (3, 4, 5) d'une fonction dédiée sur le véhicule,
- des moyens d'activation de ladite manoeuvre automatique, par action sur au moins un élément de commande (2) dédié à ladite manoeuvre automatique,
- des moyens de désactivation de ladite manoeuvre automatique, par action sur au moins un élément de commande (2) dédié à ladite manoeuvre automatique,
**caractérisé en ce qu'**il comprend en outre :
- d'autres moyens de désactivation de ladite manoeuvre automatique par action sur l'autre élément de commande (3, 4, 5) du boîtier de commande à distance (1).

2. Boîtier de commande selon la revendication 1, **caractérisé en ce que** l'élément de commande (2) de ladite manoeuvre automatique est un interrupteur réalisé sous la forme d'un bouton-poussoir.

3. Boîtier de commande selon la revendication 1, **caractérisé en ce que** l'élément de commande (2) de ladite manoeuvre automatique est un interrupteur réalisé sous la forme d'un bouton tactile.

4. Boîtier de commande selon l'une des revendications 1 à 3, **caractérisé en ce que** l'autre élément de commande (3, 4, 5) d'une fonction dédiée sur le véhicule est un interrupteur réalisé sous la forme d'un bouton-poussoir.

5. Boîtier de commande selon l'une des revendications 1 à 3, **caractérisé en ce que** l'autre élément de commande (3, 4, 5) d'une fonction dédiée sur le véhicule est un interrupteur réalisé sous la forme d'un bouton tactile.

6. Boîtier de commande selon l'une des revendications 1 à 5, **caractérisé en ce que** les autres moyens de désactivation de ladite manoeuvre automatique consiste en une réaffectation de la fonction de commande dudit autre élément de commande (3, 4, 5) d'une fonction dédiée sur le véhicule, de la fonction dédiée correspondante en une fonction d'arrêt de ladite au moins une manoeuvre automatique.

7. Boîtier de commande selon l'une des revendications 1 à 5, **caractérisé en ce que** l'élément de commande (2) de ladite manoeuvre automatique et ledit autre élément de commande (3, 4, 5) d'une fonction dédiée font partie d'une architecture électronique et **en ce que** les autres moyens de désactivation de ladite manoeuvre automatique consiste en une logique spécifique de ladite architecture électronique dans laquelle :
- si l'élément de commande (2) de ladite manoeuvre automatique est activé et que ledit autre élément de commande (3, 4, 5) d'une fonction dédiée n'est pas activé, ladite manoeuvre automatique est opérée;
- si l'élément de commande (2) de ladite manoeuvre automatique n'est pas activé et que ledit autre élément de commande (3, 4, 5) d'une fonction dédiée est activé, ladite fonction dédiée est opérée;
- si l'élément de commande (2) de ladite manoeuvre automatique est activé et que ledit autre élément de commande (3, 4, 5) d'une fonction dédiée est activé, ladite manoeuvre automatique est stoppée.

8. Boîtier de commande selon l'une des revendications 1 à 7, **caractérisé en ce que** l'action sur l'élément de commande (2) de ladite manoeuvre automatique est continue.

9. Boîtier de commande selon l'une des revendications 1 à 7, **caractérisé en ce que** l'action sur l'élément de commande (2) de ladite manoeuvre automatique est ponctuelle.

10. Boîtier de commande selon l'une des revendications 1 à 9, **caractérisé en ce que** ladite manoeuvre automatique est choisie dans un groupe comprenant au moins :
- une manoeuvre pour se garer automatiquement sur une place de stationnement ;
- une manoeuvre pour sortir automatiquement d'une place de stationnement,
- une manoeuvre pour ouvrir une porte latérale dudit véhicule,
- une manoeuvre pour fermer une porte latérale dudit véhicule,
- une manoeuvre pour ouvrir un volet de coffre ou un hayon dudit véhicule,
- et une manoeuvre pour fermer un volet de coffre ou un hayon dudit véhicule.

11. Dispositif de manoeuvre automatique d'une manoeuvre automatique du véhicule comprenant un boîtier de commande à distance selon l'une des revendications précédentes.

## Patentansprüche

1. Fernbedienungsgerät (1) einer automatischen Betätigungsvorrichtung eines Kraftfahrzeugs (6), das dazu bestimmt ist, mit einer im Bereich des Kraftfahrzeugs (6) befindlichen Zentraleinheit (7) zu kommunizieren, wobei das Gerät (1) enthält:
- mindestens ein einer automatischen Betätigung zugeordnetes Steuerelement (2),
- ein weiteres Steuerelement (3, 4, 5) einer zugeordneten Funktion im Fahrzeug,
- Aktivierungseinrichtungen der automatischen Betätigung durch Einwirkung auf mindestens ein der automatischen Betätigung zugeordnetes Steuerelement (2),
- Deaktivierungseinrichtungen der automatischen Betätigung durch Einwirkung auf mindestens ein der automatischen Betätigung zugeordnetes Steuerelement (2),
**dadurch gekennzeichnet, dass** es außerdem enthält:
- weitere Deaktivierungseinrichtungen der automatischen Betätigung durch Einwirkung auf das andere Steuerelement (3, 4, 5) des Fernbedienungsgeräts (1).

2. Bedienungsgerät nach Anspruch 1, **dadurch gekennzeichnet, dass** das Steuerelement (2) der automatischen Betätigung ein in Form einer Drucktaste hergestellter Schalter ist.

3. Bedienungsgerät nach Anspruch 1, **dadurch gekennzeichnet, dass** das Steuerelement (2) der automatischen Betätigung ein in Form einer Berührungstaste hergestellter Schalter ist.

4. Bedienungsgerät nach einem der Ansprüche 1 bis 3, **dadurch gekennzeichnet, dass** das andere Steuerelement (3, 4, 5) einer zugeordneten Funktion im Fahrzeug ein in Form einer Drucktaste hergestellter Schalter ist.

5. Bedienungsgerät nach einem der Ansprüche 1 bis 3, **dadurch gekennzeichnet, dass** das andere Steuerelement (3, 4, 5) einer zugeordneten Funktion im Fahrzeug ein in Form einer Berührungstaste hergestellter Schalter ist.

6. Bedienungsgerät nach einem der Ansprüche 1 bis 5, **dadurch gekennzeichnet, dass** die anderen Deaktivierungseinrichtungen der automatischen Betätigung aus einer Neuzuweisung der Steuerfunktion des anderen Steuerelements (3, 4, 5) einer zugeordneten Funktion im Fahrzeug, der entsprechenden zugeordneten Funktion zu einer Stoppfunktion der mindestens einen automatischen Betätigung bestehen.

7. Bedienungsgerät nach einem der Ansprüche 1 bis 5, **dadurch gekennzeichnet, dass** das Steuerelement (2) der automatischen Betätigung und das andere Steuerelement (3, 4, 5) einer zugeordneten Funktion Teil einer elektronischen Architektur sind, und dass die anderen Deaktivierungseinrichtungen der automatischen Betätigung aus einer speziellen Logik der elektronischen Architektur bestehen, in der:
- wenn das Steuerelement (2) der automatischen Betätigung aktiviert ist, und wenn das andere Steuerelement (3, 4, 5) einer zugeordneten Funktion nicht aktiviert ist, die automatische Betätigung durchgeführt wird;
- wenn das Steuerelement (2) der automatischen Betätigung nicht aktiviert ist, und wenn das andere Steuerelement (3, 4, 5) einer zugeordneten Funktion aktiviert ist, die zugeordnete Funktion ausgeführt wird;
- wenn das Steuerelement (2) der automatischen Betätigung aktiviert ist, und wenn das andere Steuerelement (3, 4, 5) einer zugeordneten Funktion aktiviert ist, die automatische Betätigung gestoppt wird.

8. Bedienungsgerät nach einem der Ansprüche 1 bis 7, **dadurch gekennzeichnet, dass** die Einwirkung auf das Steuerelement (2) der automatischen Betätigung kontinuierlich ist.

9. Bedienungsgerät nach einem der Ansprüche 1 bis 7, **dadurch gekennzeichnet, dass** die Einwirkung auf das Steuerelement (2) der automatischen Betätigung punktförmig ist.

10. Bedienungsgerät nach einem der Ansprüche 1 bis 9, **dadurch gekennzeichnet, dass** die automatische Betätigung aus einer Gruppe ausgewählt wird, die mindestens enthält:
- eine Betätigung, um automatisch auf einem Stellplatz zu parken;
- eine Betätigung, um automatisch aus einem Stellplatz auszufahren,
- eine Betätigung, um eine Seitentür des Fahrzeugs zu öffnen,
- eine Betätigung, um eine Seitentür des Fahrzeugs zu schließen,
- eine Betätigung, um eine Kofferraumklappe oder eine Heckklappe des Fahrzeugs zu öffnen,
- und eine Betätigung, um eine Kofferraumklappe oder eine Heckklappe des Fahrzeugs zu schließen.

11. Automatische Betätigungsvorrichtung einer automatischen Betätigung des Fahrzeugs, die ein Fernbedienungsgerät nach einem der vorhergehenden Ansprüche enthält.

## Claims

1. Remote control unit (1) for an automatic manoeuvring device of a motor vehicle (6), intended to communicate with a central unit (7) situated in the motor vehicle (6), said unit (1) comprising:
- at least one control element (2) dedicated to an automatic manoeuvre,
- another control element (3, 4, 5) for a dedicated function on the vehicle,
- means for activating said automatic manoeuvre, by action on at least one control element (2) dedicated to said automatic manoeuvre,
- means for deactivating said automatic manoeuvre, by action on at least one control element (2) dedicated to said automatic manoeuvre,
**characterized in that** it also comprises:
- other means for deactivating said automatic manoeuvre by action on the other control element (3, 4, 5) of the remote control unit (1).

2. Control unit according to Claim 1, **characterized in that** the control element (2) for said automatic manoeuvre is a switch produced in the form of a push button.

3. Control unit according to Claim 1, **characterized in that** the control element (2) for said automatic manoeuvre is a switch produced in the form of a touch button.

4. Control unit according to one Claims 1 to 3, **characterized in that** the other control element (3, 4, 5) for a dedicated function on the vehicle is a switch produced in the form of a push button.

5. Control unit according to one of Claims 1 to 3, **characterized in that** the other control element (3, 4, 5) for a dedicated function on the vehicle is a switch produced in the form of a touch button.

6. Control unit according to one of Claims 1 to 5, **characterized in that** the other means for deactivating said automatic manoeuvre consist of a reassignment of the control function of said other control element (3, 4, 5) for a dedicated function on the vehicle for the corresponding dedicated function into a stop function for said at least one automatic manoeuvre.

7. Control unit according to one of Claims 1 to 5, **characterized in that** the control element (2) for said automatic manoeuvre and said other control element (3, 4, 5) for a dedicated function form part of an electronic architecture and **in that** the other means for deactivating said automatic manoeuvre consist of a specific logic of said electronic architecture in which:
- if the control element (2) for said automatic manoeuvre is activated and said other control element (3, 4, 5) for a dedicated function is not activated, said automatic manoeuvre is applied;
- if the control element (2) for said automatic manoeuvre is not activated and said other control element (3, 4, 5) for a dedicated function is activated, said dedicated function is applied;
- if the control element (2) for said automatic manoeuvre is activated and said other control element (3, 4, 5) for a dedicated function is activated, said automatic manoeuvre is stopped.

8. Control unit according to one of Claims 1 to 7, **characterized in that** the action on the control element (2) for said automatic manoeuvre is continuous.

9. Control unit according to one of Claims 1 to 7, **characterized in that** the action on the control element (2) for said automatic manoeuvre is one-off.

10. Control unit according to one of Claims 1 to 9, **characterized in that** said automatic manoeuvre is chosen from a group comprising at least:
- a manoeuvre to park automatically in a parking space;
- a manoeuvre to automatically leave a parking space;
- a manoeuvre to open a side door of said vehicle,
- a manoeuvre to close a side door of said vehicle,
- a manoeuvre to open a trunk lid or tailgate of said vehicle,
- and a manoeuvre to close a trunk lid or a tailgate of said vehicle.

11. Automatic manoeuvring device for an automatic manoeuvre of the vehicle comprising a remote control unit according to one of the preceding claims.
